(19) Europäisches Patentamt
European Patent Office
Office européen des brevets

(11) **EP 2 985 494 A2**

(12) **EUROPEAN PATENT APPLICATION**

(43) Date of publication:
**17.02.2016 Bulletin 2016/07**

(51) Int Cl.:
*F16H 61/04* (2006.01)   *F16H 61/682* (2006.01)

(21) Application number: **15178701.7**

(22) Date of filing: **28.07.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **31.07.2014 IT PD20140207**

(71) Applicant: **Magneti Marelli S.p.A.
20011 Corbetta (MI) (IT)**

(72) Inventors:
• **DE RITO, Valerio
20011 Corbetta (MI) (IT)**
• **PRODI, Giovanni
20011 Corbetta (MI) (IT)**

(74) Representative: **Mitola, Marco
Jacobacci & Partners S.p.A.
Via Berchet 9
35131 Padova (IT)**

(54) **METHOD OF MANAGEMENT AND CONTROL OF THE GEAR CHANGE STEPS OF A VEHICLE EQUIPPED WITH NON-MANUAL TRANSMISSION, AND TRANSMISSION APPARATUS FOR VEHICLES EQUIPPED WITH NON-MANUAL TRANSMISSION**

(57) A method of management and control of the gear change steps of a vehicle equipped with non-manual transmission, comprising the steps of:
- providing a vehicle having an endothermic engine provided with an engine control unit, and having a non-manual transmission, said non-manual transmission being provided with a gearbox control unit,
- wherein the vehicle is equipped with an electric machine for starting and charging the battery (BSG) operatively connected to the endothermic engine, said electric machine being able to work as an electric motor to control the rotation of a drive shaft of the endothermic engine and as an electric generator to charge a battery of said endothermic engine,
- the gear change comprising:
- a first step of releasing the torque to a primary transmission shaft by disengaging, by means of a clutch, the drive shaft from said primary transmission shaft,
- a second step of engagement of a new gear, keeping the clutch disengaged, wherein the speed of the thermal engine is controlled,
- a third step of clutch engagement so as to reconnect the drive shaft with the primary transmission shaft, in which the thermal engine is brought back to delivering the torque requested by the driver.

Advantageously, during the gear change steps, the electric machine for starting and charging the battery (BSG) is used as a generator by taking torque from the drive shaft of the endothermic engine, in such a way as to synchronise, at least partially, the speed of the drive shaft with the speed of rotation of the primary transmission shaft. The endothermic engine (8) is always engaged so as to continue to deliver torque to the drive shaft (28) and the electric machine for starting and charging the battery (24) controls the torque available to the drive shaft (28) of the endothermic engine (8).

Fig.1

EP 2 985 494 A2

**Description**

FIELD OF APPLICATION

This invention relates to a method of managing the gear change steps in a vehicle equipped with a non-manual transmission, such as, for example, an automated manual transmission, a dual-clutch transmission or an automatic transmission, and a related transmission apparatus for vehicles equipped with non-manual transmission, such as, for example, an automated manual transmission, a dual-clutch transmission or an automatic transmission.

STATE OF THE ART

As is known, in a vehicle with non-manual transmission, the engine must generate a torque gap necessary for the gear change operation. The step of releasing the torque, necessary for the gear change, is usually generated by acting on the control of the endothermic engine. For example, such release of torque is obtained by strongly degrading the ignition advance and, if it were not enough, also reducing the pressure in the manifold.

In particular, in the known solutions, during the gear change in a vehicle equipped with non-manual transmission, the transmission control unit (TCU) becomes the master on the torque control managed by the engine control unit (ECU). This is because, during the opening and closing of the clutch, the speed of the thermal engine must remain under control of the TCU to maintain the duration of the change at acceptable values (the longer the duration of the gear change the greater the negative impact on driveability) and, above all, so that oscillations are not generated on the driveline in the clutch closing step. In fact, in this step, it is important to maintain the speed of the thermal engine just above the speed of the primary gearbox shaft.

Therefore, the gear shift procedure in the known solutions is divided into three steps:

1) Releasing torque: this is the first step of gear change in which the TCU starts a gradual opening of the clutch with consequent request to the thermal engine to reduce torque (obviously the torque generated by the thermal engine must be less than the torque transmittable by the clutch, so as not to induce slippage in the latter);

2) Engaging the new gear: in this step the gearbox control unit engages the new gear and controls the speed of the thermal engine.

3) Restoring torque: this is the step in which the TCU starts to close the clutch, requesting the motor to gradually increase the torque back to that requested by the driver (this step is particularly critical due to the triggering of possible oscillations on the driveline that could affect the dynamics of the vehicle).

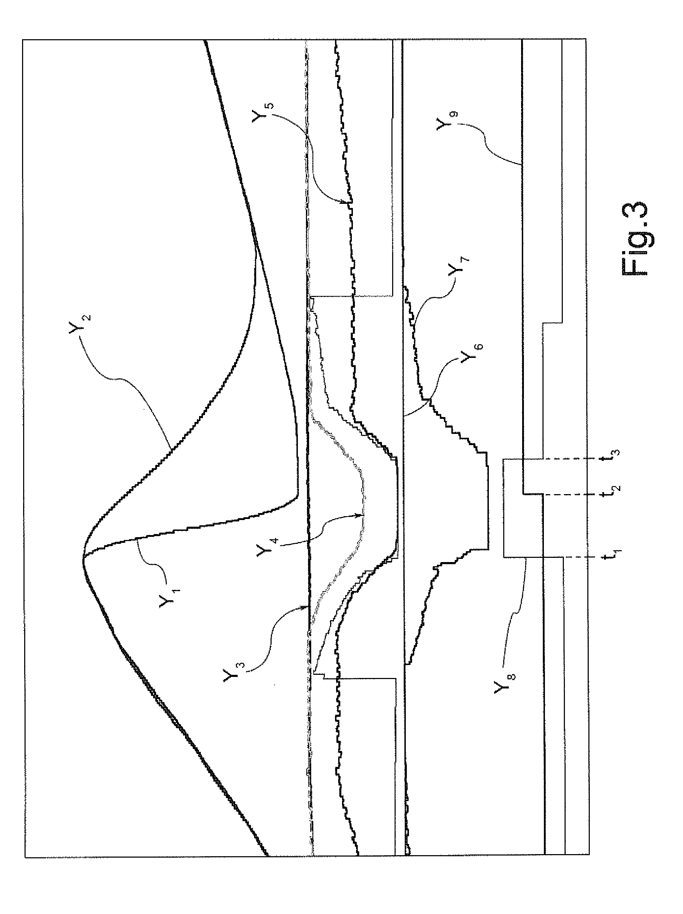

The three steps described above are illustrated in the diagram of Figure 3, in which the abscissa represents shift times and the ordinate represents the trends of the values defined below.

In particular:

- at time t1, torque release step 1 ends,
- at time t2, the engagement of the new gear (step 2) occurs;
- at time t3, step 3, i.e., the closing of the clutch, begins.

The curves shown represent respectively:

- Y1: trend of the rotation speed of the clutch;
- Y2: trend of the rotation speed of the drive shaft;
- Y3: theoretical torque requested by the user through the accelerator pedal;
- Y4-Y5: trend of the real torque (max and min) obtained at the drive shaft;
- Y6: maximum combustion yield;
- Y7: real combustion yield achieved in the gear change;
- Y8: trend of the clutch position (opening/closing);
- Y9: transition from a first to a second gear.

As one can note, throughout the gear change the engine has a combustion yield below the maximum for two different reasons.

During the first step, that of releasing torque, the engine control unit calls for a reduction of the torque delivered by closing the butterfly valve; however, the manifold pressure drops with a slower dynamic with respect to the request to the gearbox control unit: from this follows a potential higher torque than that required by the gearbox and therefore a yield less than the maximum.

Instead, during the third step, that of reduced torque, it is the same engine control unit that requests a "reserve" of torque necessary to meet the requests of the gearbox that are not known; in this case as well, there is a potential torque higher than that required by the gearbox and therefore a yield less than the maximum.

With the architecture of the prior art, speed control is slow and imprecise, and the restoration of torque is slow due to the intrinsic dynamics of the thermal engine.

The reduction of the times for releasing and restoring torque would provide considerable advantages in terms of driving feeling by improving the perception of the torque gap felt by the driver during the gear change.

In normal applications the reduction of these times is limited, primarily, by the fact that during the release step pressure in the manifold, and thus potential torque, decreases and this does not allow the engine to have particularly fast dynamics in the torque restoration step.

Speeding up only the torque release step, which is physically possible, would, on the other hand, result in a sharp deceleration, noticeable by the driver as annoying, precisely because it would not be possible to respond with equal rapidity also in the restoration step.

Therefore, this known strategy for controlling the gear change is not free from drawbacks.

In fact, on the one hand, the operating conditions of the endothermic engine are worsened since acting on parameters essential for endothermic yield, such as the ignition advance or the throttling of the inlet pressure, and thus the volumetric yield. The throttling of the inlet pressure can also create annoying response delays (turbo lag), especially in turbocharged engines. In this way, also, combustion conditions worsen and, therefore, the polluting emissions of the endothermic engine. In addition, the management strategy of the endothermic engine may not be effective in the case of engines with a high rotational inertia: in fact, in this case, the torque gap generated by the worsening of combustion is not followed by an immediate, or in any case sufficient, variation of the rotation speed of the engine itself: in other words, the endothermic engine is slow in dynamics.

## PRESENTATION OF THE INVENTION

It follows that, with the solutions of the known art, it is not possible to obtain, in the vehicles with non-manual transmission, a gear change that is fast, smooth and efficient, without worsening the conditions of operation of the endothermic engine and/or the driving comfort.

Therefore, there is a need to solve the drawbacks and limitations mentioned in reference to the prior art.

This need is satisfied by a method of managing the gear change steps according to claim 1 and apparatus according to claim 17.

## DESCRIPTION OF THE DRAWINGS

Further characteristics and advantages of this invention will be more understandable from the following description of its preferred and non-limiting examples of embodiments, wherein:

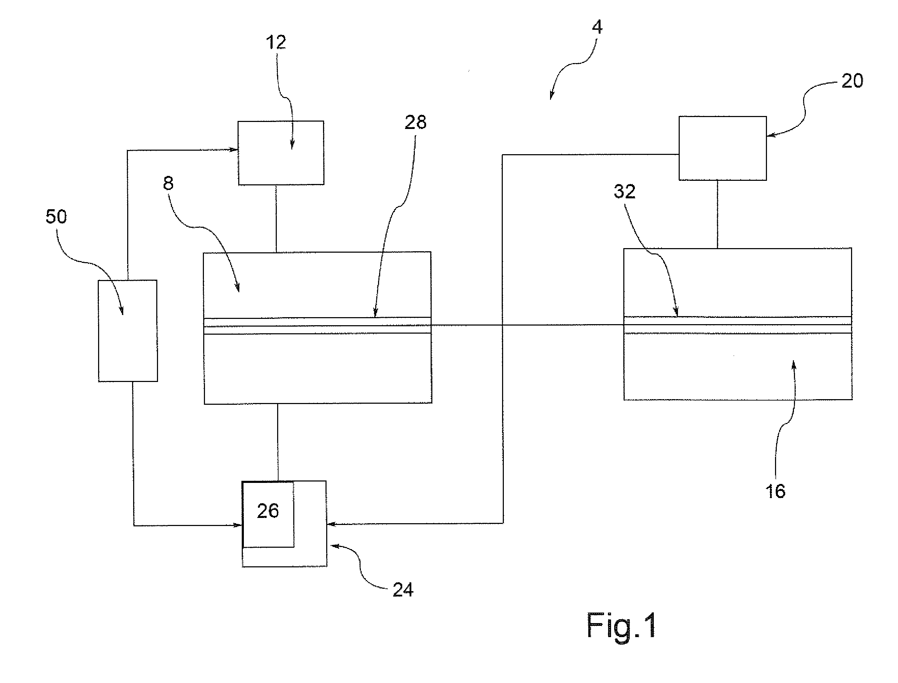

Figure 1 is a schematic view of a transmission apparatus according to a first embodiment of this invention;

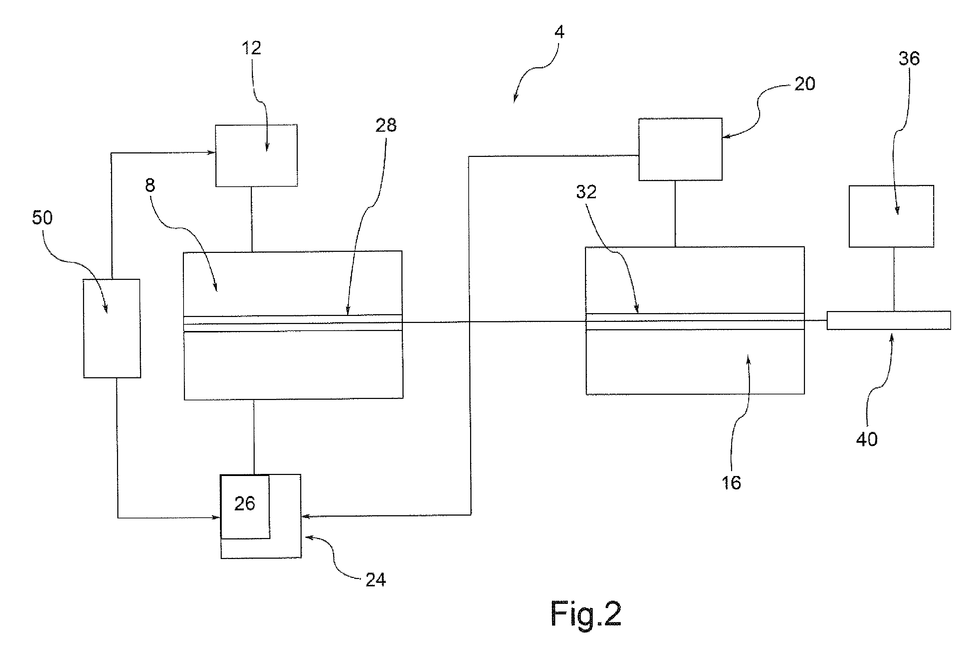

Figure 2 is a schematic view of a transmission apparatus according to a second embodiment of this invention;
Figure 3 is a diagram of the main operating parameters of a transmission apparatus of the prior art;
Figure 4 is a control scheme of a transmission apparatus according to this invention;
Figure 5 is a diagram of the main operating parameters of a transmission apparatus according to this invention;
Figure 6 is an operating diagram of an engine with dual-mass flywheel, regulated according to an apparatus and regulation method of the prior art.

The members, or parts of members, in common between the embodiments described below will be indicated with the same reference numbers.

## DETAILED DESCRIPTION

With reference to the above figures, reference number 4 globally indicates an overall schematic view of a transmission apparatus of a vehicle according to this invention.

In particular, the transmission apparatus 4 for vehicles comprises an endothermic engine 8 provided with an engine control unit 12, and a non-manual transmission 16, said non-manual transmission 16 being provided with a gearbox control unit 20.

For the purposes of this invention, non-manual transmission means, for example, an automated manual transmission (AMT), a dual-clutch transmission (DCT) or an automatic transmission. In other words, it means any type of transmission that is not completely manual, but that it is "at least partially servo-assisted".

For the purposes of this invention, the specific type of endothermic engine is not relevant and not even the specific type of automated manual transmission, meaning by "automated transmission" a type of gearbox for automotive applications in which manual activations are replaced by automatic activations, with particular reference to the engagement/disengagement of the clutch and the engagement/disengagement of speed ratios.

The transmission apparatus also comprises an electric machine for starting and charging the battery 24 (commonly called a BSG) operatively connected to the endothermic engine 8, wherein said electric machine 24 is able to work both as an electric motor to control the rotation of a drive shaft 28 of the endothermic engine 8 (typically for starting the engine) and as an electric generator. When working as a generator, the electric machine can, for example, charge a battery of said endothermic engine 8 (operating, for example, as an alternator) and/or power any electrical utilities of the vehicle.

The electric machine for starting and charging the battery 24 is provided with its own BSG control unit 26.

The gear change comprises:

- a first step of releasing the torque to a primary transmission shaft 32, in which the drive shaft 28 is disengaged, by means of a clutch (for example of known type) from said primary transmission shaft 32; then, a second step of engagement of a new gear, maintaining the clutch disengaged, and finally, a third step of engaging the clutch so as to reconnect the drive shaft 28 with the primary transmission shaft 32, and make the thermal engine deliver the torque requested by the driver.

The gearbox control unit 20 is programmed to perform the gear change according to the cited steps.

Advantageously, during the gear change steps, the endothermic engine 8 is always engaged so as to continue to provide torque to the drive shaft 28.

Advantageously, during the gear change steps, the electric machine for starting and charging the battery 24 controls the torque available to the drive shaft 28 of the endothermic engine 8.

In particular, according to this invention, during the gear change steps, the electric machine for starting and charging the battery 24 (BSG) is used as a generator by taking torque from the drive shaft 28 of the endothermic engine 8, so as to synchronise, at least partially, the speed of rotation of the drive shaft 28 with the speed of rotation of the primary transmission shaft 32. The operation of the electric machine for starting and charging the battery 24 (BSG) is controlled and regulated by a control unit of the vehicle 50 (VMU), specifically programmed for in that sense; in general, it is the vehicle control unit 50 that allocates to the two actuators, i.e., the endothermic engine 8 and the electric machine for starting and charging the battery 24 (BSG), the request for torque from the gearbox control unit 20, commanding their actuation to the respective engine 12 and BSG 26 control units.

In reality, it is possible to have this operation, even outside of the gear change: for example during a charging step, it is desired that the drive shaft have a certain traction torque available, the result of a superabundant torque of the thermal engine 8, partially offset by a braking torque of the electric machine for starting and charging the battery 24 (BSG).

During the gear change steps, the endothermic engine 8 is managed by the relative engine control unit 12 as a function of the torque request made by the user.

For example, during the gear change steps, the engine control unit 12 adjusts the engine 8 so as to deliver the torque requested by the user as a function of the position of the accelerator control.

In other words, during the gear change, the endothermic engine continues to provide the torque/power that the user requests directly by means of the accelerator control. In this way, as seen, the endothermic engine 8 is constantly in engaged, i.e., continuously dispenses positive torque to the drive shaft 28, as a function of torque requested of the drive shaft by the user through the accelerator control. The endothermic engine 8 does not work in "Cut-Off" but continues to delivering torque as a function of torque request of the driver.

In this way, thanks to the fact that the engine is always engaged, annoying delays in engine response are avoided, especially if supercharged, (turbo lag) since, if the endothermic engine is always engaged, the turbocharger is also always ready to provide the supercharged flow of fuel.

Preferably, during the gear change steps, the gearbox control unit 20 prevails on the torque control implemented at the drive shaft of the endothermic engine 8 performed by the engine control unit 12 and by the BSG control unit 26 (inverter) that controls the electric machine for starting and charging the battery 24.

As seen, the electric machine for starting and charging the battery 24 (BSG) is used to take torque from the drive shaft 28 of the endothermic engine 8, so as to satisfy the torque requested from the drive shaft and synchronise, at least partially, the speed of the drive shaft 28 with the speed of the primary transmission shaft 32.

The rule for torque taken by the electric machine 24 can be regulated at will as a function of the cited three gear change steps.

For example, during the first gear change step, the torque to the transmission shaft 32 is released, by means of the electric machine for starting and charging the battery 24, according to a substantially linear pattern.

Preferably, during the second gear change step, the torque to the drive shaft 28 is kept constant to the torque value reached at the end of the first gear change step by means of the electric machine for starting and charging the battery 24 (BSG).

Finally, during the third gear change step, the torque to the drive shaft 28 is increased up to the torque value requested by the user, according to a substantially linear pattern, releasing the torque absorption by the electric machine for starting and charging the battery 24 (BSG).

According to an embodiment, the release and increase curves of the torque to the drive shaft obtained, respectively, during the first and the third gear change steps, are substantially mutually symmetrical.

If the torque delivered to the drive shaft 28, obtained by the sum of the torque delivered by the thermal engine 8 and the maximum resistive torque obtainable from the electric machine for starting and charging the battery 24, is greater than the torque required by the gearbox control unit 20, the engine control unit 12 operates a power cut to the engine itself, so as to cooperate with the electric machine for starting and charging the battery 24 in the torque control step to the drive shaft 28 and synchronise the speed of the drive shaft 28 and the speed of the primary transmission shaft 32.

For example, said power cut comprises the steps of changing the ignition advance of one or more cylinders of the endothermic engine 8, and/or changing the parameters of intake and/or discharge of one or more cylinders of the endothermic engine 8.

Normally, in vehicles equipped with BSG, one is able to obtain the desired reserve torque by using the electric machine for starting and charging the battery 24 BSG as a torque absorber; at the same time, said absorber torque generates energy that can charge the battery of the vehicle.

Thanks to the use of BSG as a torque absorber, one can obtain reserve torque of any trend, since an electric machine (precisely the BSG) has a very high response speed (certainly greater than the response speed of the endothermic engine).

Therefore, in the case of a request for "sporty" driving by the user, it is desirable to very steep torque curves, tending ideally in two steps, in correspondence of the first and third gear change step.

On the other hand, so steep gradients in the torque trend would generate poor ride comfort; in these conditions it is very useful to have "gap-filling". Gap-filling is commonly obtained by means of an electric motor in a hybrid solution (the electric motor is always connected to the wheels, on the secondary of the gearbox or on one of the two axles of the vehicle). This second electric motor can be used to fill torque gaps during the change so that the user notices the gear change as little as possible.

In particular, according to a possible embodiment, the transmission apparatus 4 comprises a second electric motor 36 operatively connected with said automated non-manual transmission 16, so as to achieve, together with the endothermic engine 8, a propulsion of the hybrid type, and wherein during the step of disengagement and subsequent engagement of the clutch, the second electric motor 36 exerts torque on said non-manual transmission 16 so as to control the forward speed of the vehicle and fill the torque gaps during the gear change.

For example, the second electric motor 36 is operatively connected to a secondary transmission shaft 40, arranged downstream of the engine 8 and of the primary transmission shaft 32 on which the clutch acts.

The intervention and regulation of the second electric motor 36 is managed by the vehicle control unit 50 (VMU) that, as seen, supervises the actuations of all the motors/actuators by means of the respective control units.

In particular, the gearbox control unit 20 prevails on the normal torque output to the drive shaft actuated through the endothermic engine 8 and the electric machine for starting and charging the battery 24.

The vehicle control unit 50 is programmed in such a way that, if the torque supplied by the thermal engine 8 is greater than the maximum resistive torque obtainable from the electric machine for starting and charging the battery 24, the engine control unit (50) commands the engine control unit 12 to cut power cut to the engine 8 itself, so as to cooperate with the electric machine for starting and charging the battery 24 in the torque control step to the drive shaft 28 and synchronise the speed of the drive shaft 28 and the speed of the primary transmission shaft 32. So, in this embodiment, the torque to the shaft 28 of the endothermic engine 8 is controlled by the electric machine for starting and charging the battery 24 (BSG), thanks to the vehicle control unit 50 and without changing the control strategy of the gearbox control unit 20, i.e., without intervening on the control of the gearbox control unit 20. So, in this embodiment, the torque of the drive shaft 28 is controlled by means of the electric machine for starting and charging the battery 24 (BSG) without changing the control strategy of the gearbox control unit 20.

According to a further possible embodiment, the vehicle control unit 50 coordinates the engine control unit 12, to cut power to the engine 8, and coordinates the electric machine for starting and charging the battery 24 during the step of controlling torque to the drive shaft 28, so as to synchronise the speed of the drive shaft 28 and the speed of the primary transmission shaft 32, in particular in gear change steps 2 and 3.

It should be noted that in this way, which controls the speed of the electric machine for starting and charging the battery 24, in particular between the second and the third gear change step, the control strategy of the gearbox control unit 20 is changed, i.e., one intervenes on the control of the gearbox control unit 20.

So, in this embodiment, the speed of the drive shaft is controlled by the electric machine for starting and charging the battery 24 (BSG), changing the control strategy of the gearbox control unit 20.

The solution of this invention achieves maximum efficiency in combination with a hybrid propulsion solution, wherein, on the one hand, the gear change steps are significantly speeded up (to the point of making them similar to the shift times of a more complex and more expensive dual-clutch gearbox) and, on the other, the torque gaps are filled with "gap-filling", so as not to affect driving comfort.

Below, we will explain in greater detail the operating and intervention logic of the gearbox control unit as a function of the values measured and controlled.

First, we must first define the following values:

• TICEOBJ target torque to the thermal engine during the gear change; in other words, it is the torque that the engine must have (target) during the gear change, regardless of the real torque request made by the driver through the accelerator control;

• TDRIVER target torque to the drive shaft of the thermal engine requested by the driver; it is, in fact, the torque requested by the driver by pressing the accelerator control, as a function of the request of performance;

• TTCU: target torque to the drive shaft of the thermal engine requested by the gearbox control unit (TCU);

• TBSGMIN: maximum braking torque of the electric machine (BSG) brought to the shaft of the thermal engine (it has a negative sign since it is opposed to the torque delivered by the endothermic engine).

• TBSGOBJ: target torque to the electric machine brought to the shaft of the endothermic engine; this is the value of the resistant torque, i.e., opposite to the torque generated by the electric motor, which is exerted by the electric machine (BSG) in order to reach the torque required by TCU 20 to the motor shaft 28.

• TICEACT: torque created by the endothermic engine.

It should be noted that, in a traditional system, during a gear change TICEOBJ is set equal to the target TTCU.

From a control point of view, one can calculate the target for the thermal engine during the gear change using the following formula:

$$TICEOBJ = max(TDRIVER,( TTCU - TBSGMIN))$$

where the operator max (x,y) provides the greater of x and y.

This torque value TICEOBJ is, as seen, the torque value that the endothermic engine is intended to have during the gear change, regardless of the actual and contingent torque requested by the user and by the gearbox control unit 20.

Knowing the torque value TTCU that must be obtained by the shaft of the endothermic engine and knowing the contingent torque TICEACT delivered by the thermal engine, one calculates the target torque for electric machine, i.e., the value of resistant torque that the electric machine must exert on the shaft of the endothermic engine:

$$TBSGOBJ = TTCU - TICEACT$$

It should be noted that, due to the intrinsic torque delivery dynamic of the endothermic engine 8, in general TICEACT will be different from TICEOBJ; in order to then operate with a greater margin of manoeuvre, without being forced to reduce the combustion efficiency to speed up the dynamics, one can consider a maximum braking torque TBSGMIN lower in absolute value than the real physical limit, in order, in the case of need, to have a greater braking capacity with respect to that considered in the formula.

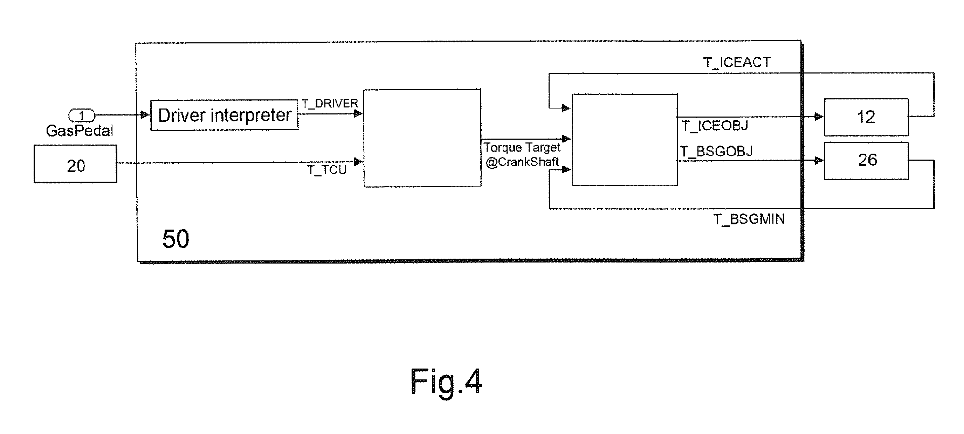

The diagram of the control is summarised in Figure 4.

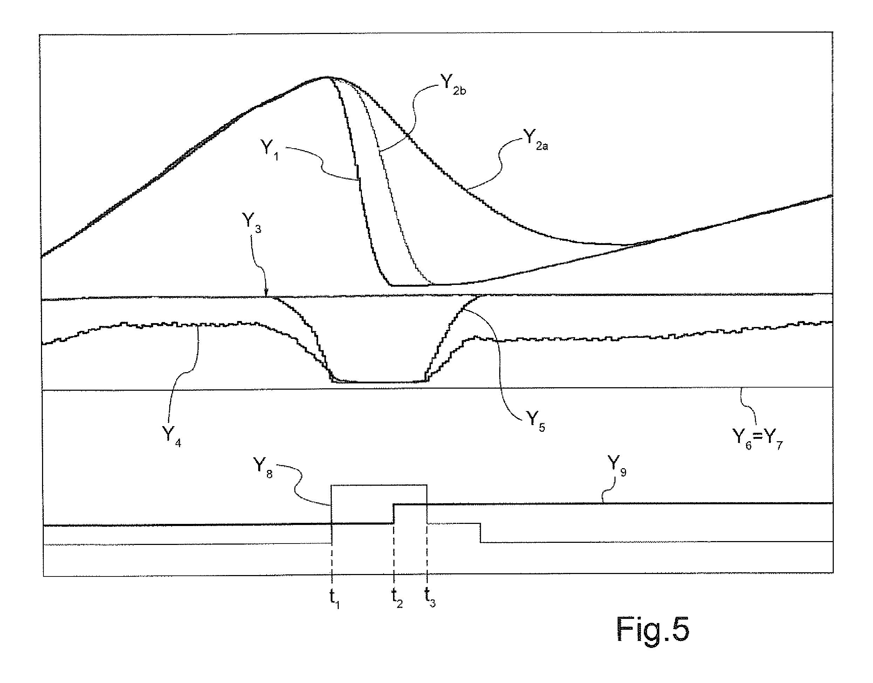

Furthermore, in Figure 5, one can analyse the possibility of using the electric machine (BSG) to synchronise the engine speed to the clutch speed.

The abscissa represents shift times and the ordinate represents the trends of the values defined below.

In particular:

- at time t1, torque release step 1 ends,
- at time t2, the engagement of the new gear (step 2) occurs;
- at time t3, step 3, i.e., the closing of the clutch, begins.

The curves shown represent respectively:

- Y1: trend of the rotation speed of the clutch (primary transmission shaft);
- Y2a: trend of the rotation speed of the drive shaft 28, without the intervention of the electric machine for starting and charging the battery 24;
- Y2b: trend of the rotation speed of the drive shaft 28, with the intervention of the electric machine for starting and charging the battery 24;
- Y3: theoretical torque requested by the user through the accelerator pedal;
- Y4-Y5: trend of the real torque (max and min) obtained at the drive shaft;
- Y6: maximum combustion yield;
- Y7: real combustion yield achieved in the gear change; as you can see, Y6 = Y7;
- Y8: trend of the clutch position (opening/closing);
- Y9: transition from a first to a second gear.

In this step, the greater the angle of incidence of the engine revolutions on those of the clutch, the greater the possibility of triggering oscillations on the transmission line (driveline).

For this reason, this step must be managed by the gearbox control unit (TCU) very gradually, both in terms of closure of the clutch and the torque request to the thermal engine, seeking, however, to complete the gear change within certain time limits.

Figure 5 also allows appreciating the fact that the combustion yield achieved is equal to the maximum combustion.

Synchronisation by means of the electric motor is particularly advantageous in the case of engines with high inertia.

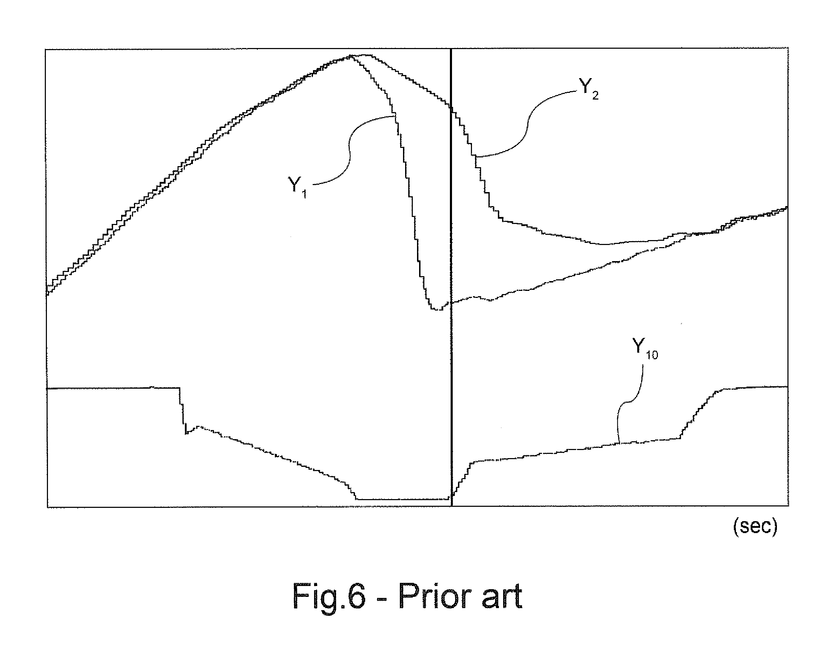

Figure 6 (relating to a solution of the prior art) refers directly to one of these engines with dual-mass flywheel, and you can see how, during the cut-off step, the drop of engine revolutions is particularly slow forcing the gearbox control unit to decrease the engine speed with the clutch.

The abscissa represents shift times and the ordinate represents the trends of the values defined below.

In particular:

- Y1: trend of the rotation speed of the clutch (primary transmission shaft);
- Y2: trend of the rotation speed of the drive shaft 28,
- Y10: trend of the torque transmitted to the clutch.

As can be appreciated from the description, the test method according to the invention allows overcoming the drawbacks presented in the prior art.

In fact, with the application of this invention, the ignition advance is kept at maximum efficiency and, therefore, the endothermic engine is kept engaged during the gear change step and the surplus torque delivered by the endothermic engine during said gear change is advantageously used to charge the battery.

Therefore, this invention allows having a torque of the endothermic engine equal to that requested by the driver and a combustion yield equal to the maximum.

In fact, as seen, during the gear change steps, the endothermic engine remains constantly engaged, i.e., always delivers positive torque to the drive shaft; in this way, the endothermic engine is always ready to start again with the restored torque following the gear change, resuming the acceleration step with extreme promptness. The endothermic engine does not work in "Cut-Off" but continues to deliver the torque requested by the driver.

The electric machine for starting and charging the battery controls the torque available to the drive shaft of the endothermic engine: obviously such a torque control will be faster and more efficient in terms of yields and times because implemented via an electric machine that has significantly faster response times and a much lower inertia with respect to an endothermic engine.

In fact, the invention allows generating this torque gap, necessary for performing the gear change, using the electric machine (i.e., motor/generator) used for cranking (starting) and charging the battery (BSG) thus allowing energy recovery and speeding up the manoeuvre, since the electric motor has a markedly faster dynamic than the endothermic engine.

The solution, easy to implement, can be applicable via software: in particular, the application of this invention is intended for vehicles already equipped with all necessary parts. This implies that there are no additional costs, except those relating to the functional development of the management software.

The invention allows reducing gear change times because the thermal engine can continue to deliver the torque requested by the driver (operating with the ignition advance of maximum efficiency) and thus without discharging the air in the manifold, and the target torque at the shaft requested by the TCU can be obtained by braking with the electric motor.

The fact that the endothermic engine does not work "Cut-Off", but continues to provide the torque requested by the driver, determines advantages in terms of speed in resuming the acceleration of the vehicle following the change of gear and reduction of fuel consumption and emissions of pollutants from the endothermic engine, since it is not necessary to modify, choke and often worsen the thermodynamic yield of the endothermic engine during the gear change steps.

Moreover, the torque control provided by the electric machine is certainly faster and more efficient than the torque control achievable by altering the operating parameters of the endothermic engine.

As seen, in addition to the torque control of the drive shaft, it is possible to use the electric machine for starting and charging the battery 24 (BSG) as a speed regulator, keeping all the benefits seen previously, but also being able to count on a much faster and more precise control (the control system of the electric machine provides for the presence of a high-precision encoder) during the speed synchronisation step between the thermal engine and the primary shaft of the gearbox.

In particular, the speed regulation function is performed between steps 2 and 3 of the gear change, i.e., between the engagement of the gear and the restored torque, so as to make the change not only fast but also fluid and substantially "undetectable" by the user.

In this way, there are advantages both in terms of driving feeling and speeding up the dynamics of the two steps (release and restoration of torque) thanks to the quick response of the electric motor, and in energy terms because the braking torque applied by the electric motor is converted into charging the battery. With regard to this last point, it should be noted that, unlike what happens in a traditional gear change, the engine does not work in "Cut-Off" but continues to deliver the torque required by the driver. Although this results in an increase in consumption in terms of $CO_2$, it should be kept in mind how the degradation of advance actuated in this step, under normal conditions, indicates inefficient combustion, in any case.

So, with this invention we are able to always make the engine work in the best conditions of volumetric yield, without having to choke it, so as to have the engine ready in the next gear change step without having annoying delays of engine response, especially if supercharged (turbo lag) since the endothermic engine is always engaged and, therefore, the turbocharger is also always ready to provide the flow of supercharged fuel.

Therefore, in summary, this invention requires that the endothermic engine is always engaged and that the electric machine for starting and charging the battery controls the torque available to the drive shaft of the endothermic engine.

This torque control by the electric machine on the endothermic engine is faster and more efficient than the solutions of the known art.

Furthermore, this invention is particularly advantageous in the case of hybrid vehicles that mount a second electric motor on the secondary shaft of the gearbox able to perform the so-called "Torque Gap Filling".

In this case, in fact, while from the viewpoint of drivability, the speed of the release and restoration of torque together with Gap Filling makes the manoeuvre fast and without torque gaps, from the energy point of view the speed of the change reduces the battery consumption necessary for the same Gap Filling.

A person skilled in the art, in order to satisfy contingent and specific needs, may make numerous modifications and variations to the apparatuses described above, all however contained within the scope of the invention as defined by the following claims.

## Claims

1. Method of management and control of the gear change steps of a vehicle equipped with non-manual transmission (16), comprising the steps of:

    - providing a vehicle having an endothermic engine (8) provided with an engine control unit (12), and having a non-manual transmission (16), said non-manual transmission (16) being provided with a gearbox control unit (20),
    - wherein the vehicle is equipped with an electric machine for starting and charging the battery (24) operatively connected to the endothermic engine (8), said electric machine (24) being able to work as an electric motor to control the rotation of a drive shaft (28) of the endothermic engine (8) and as an electric generator to recharge a battery of said endothermic engine (8),
    - the gear change comprising:
    - a first step of releasing the torque to a primary transmission shaft (32) by disengaging, by means of a clutch, the drive shaft (28) from said primary transmission shaft (32),
    - a second step of engagement of a new gear, keeping the clutch disengaged and controlling the speed of the drive shaft (28) of the thermal engine (8),
    - a third step of clutch engagement so as to reconnect the drive shaft (28) with the primary transmission shaft

(32), and make the thermal engine (8) deliver the torque requested by the driver,

**characterised in that**:

- during the gear change steps, the endothermic engine (8) is always engaged so as to continue to provide torque to the drive shaft (28),
- during the gear change steps, the electric machine for starting and charging the battery (24) controls the torque available to the drive shaft (28) of the endothermic engine (8),
- in such a way that the electric machine for starting and charging the battery (24) is used as a generator by taking torque from the drive shaft (28) of the endothermic engine (8), so as to release the torque transmitted by the drive shaft (28) of the thermal engine (8) and synchronise, at least partially, the speed of rotation of the drive shaft (28) with the speed of rotation of the primary transmission shaft (32).

2. Method according to claim 1, wherein the electric machine for starting and charging the battery (24), when acting as a generator, recharges the battery of the endothermic engine (8) and/or any vehicle electric utilities.

3. Method according to claim 1 or 2, wherein during the gear change steps, the endothermic engine (8) is managed by the relative engine control unit (12) as a function of the torque request made by the user.

4. Method according to any one of the preceding claims, wherein during the gear change steps, the engine control unit (12) adjusts the motor (8) so as to deliver the torque requested by the user as a function of the position of the accelerator control.

5. Method according to any one of the preceding claims, wherein during the gear change steps, the gearbox control unit (20) overrides the torque control of the endothermic engine (8) carried out by the engine control unit (12).

6. Method according to any one of the preceding claims, wherein during the first gear change step, the torque to the primary transmission shaft (32) is released, by means of the electric machine for starting and charging the battery (24), according to a substantially linear pattern.

7. Method according to any one of the preceding claims, wherein during the second gear change step, the torque to the drive shaft (28) is kept constant to the torque value reached at the end of the first gear change step by means of the electric machine for starting and charging the battery (24).

8. Method according to any one of the preceding claims, wherein during the third gear change step, the torque to the drive shaft (28) is increased up to the torque value requested by the user, according to a substantially linear pattern, releasing the torque absorption by the electric machine for starting and charging the battery (24).

9. Method according to any one of the preceding claims, wherein the release and increase curves of the torque to the primary transmission shaft (32), respectively, obtained during the first and the third gear change steps, are substantially mutually symmetrical.

10. Method according to any one of the preceding claims, wherein if the torque delivered to the drive shaft (28), obtained by the sum of the torque delivered by the thermal engine (8) and the maximum resistive torque obtainable from the electric machine for starting and charging the battery (24), is greater than the torque required by the gearbox control unit (20), the engine control unit (12) operates a power cut to the engine (8) itself, so as to cooperate with the electric machine for starting and charging the battery (24) in the torque control step to the drive shaft (28) and synchronise the speed of the drive shaft (28) and the speed of the primary transmission shaft (32).

11. Method according to claim 10, wherein said power cut comprises the steps of changing the ignition advance of one or more cylinders of the endothermic engine (8), and/or changing the parameters of intake and/or discharge of one or more the cylinders of the endothermic engine (8).

12. Method according to any one of the preceding claims, wherein the vehicle is equipped with a vehicle control unit (50), the electric machine for starting and charging the battery (24) is provided with its own control unit (26), and wherein the control unit of the vehicle (50) controls the actuation of the endothermic engine (8) and of the electric machine for starting and charging the battery (24) through the respective control units of the motor (12) and control of the electric machine for starting and charging the battery (26).

13. Method according to claim 12, wherein the control unit of the vehicle (50) operates a control of the torque to the drive shaft (28) of the endothermic engine (8) by means of the electric machine for starting and charging the battery (24) and without changing the control strategy of the gearbox control unit (20).

14. Method according to claim 12, wherein the control unit of the vehicle (50) controls the speed of the electric machine for starting and charging the battery (24) so as to synchronise the speed of the drive shaft (28) with the speed of the primary transmission shaft (32), modifying the control strategy of the gearbox control unit (20).

15. Method according to any one of the preceding claims, wherein the vehicle comprises a second electric motor (36) operatively connected with said non-manual transmission (16), so as to achieve, together with the endothermic engine (8), a propulsion of the hybrid type, and wherein during the step of disengagement and subsequent engagement of the clutch, the second electric motor (36) exerts torque on said automated manual transmission (16) so as to control the forward speed of the vehicle and fill the torque gaps during the gear change.

16. Method according to claim 15, wherein the second electric motor (36) is operatively connected to a secondary transmission shaft (40), arranged downstream of the engine (8) and of the primary transmission shaft (32) on which the clutch acts.

17. Transmission apparatus (4) for vehicles comprising:

- an endothermic engine (8) provided with an engine control unit (12),
- a non-manual transmission (16), said non-manual transmission (16) being provided with a gearbox control unit (20),
- an electric machine for starting and charging the battery (24) operatively connected to the endothermic engine (8), said electric machine (24) being able to work as an electric motor to control the rotation of a drive shaft (28) of the endothermic engine (8) and as an electric generator to recharge a battery of said endothermic engine,
- wherein the gearbox control unit (20) is programmed to perform the gear change according to the following steps, wherein:
- in a first step of releasing the torque to the primary transmission shaft 32, the drive shaft (8) is disengaged by means of a clutch from said primary transmission shaft (32),
- in a second step, a new gear is engaged, keeping the clutch disengaged and the speed of the drive shaft (28) of the thermal engine (8) is controlled,
- in a third step, the clutch is engaged so as to reconnect the drive shaft with the primary transmission shaft and the thermal engine (8) is returned to deliver the torque requested by the driver,
**characterised in that**
- the apparatus (4) is equipped with a control system programmed in such a way that, during the gear change steps, the endothermic engine (8) is always engaged so as to continue to provide torque to the drive shaft (28),
- the apparatus (4) is equipped with a programmed control system, so that during said gear change steps, the electric machine for starting and charging the battery (24) controls the torque available to the drive shaft (28) of the endothermic engine (8) in such a way that the electric machine for starting and charging the battery (24) is used as a generator by taking torque from the drive shaft (28) of the endothermic engine (8), so as to release the torque transmitted by the drive shaft (28) of the thermal engine (8) and synchronise, at least partially, the speed of the drive shaft (28) with the speed of the primary transmission shaft (32).

18. Transmission apparatus (4) according to claim 17, wherein the engine control unit (12) is programmed so that, during the gear change steps, the endothermic engine (8) is managed as a function of the torque request made by the user, irrespective of the operations performed by the non-manual transmission (16).

19. Transmission apparatus (4) according to any one of claims 17 to 18, wherein the engine control unit (12) is programmed so that if the torque delivered to the drive shaft (28), obtained by the sum of the torque delivered by the thermal engine (8) and the maximum resistive torque obtainable from the electric machine for starting and charging the battery (24), is greater than the torque required by the gearbox control unit (20), said engine control unit (12) operates a power cut to the engine (8) itself, so as to cooperate with the electric machine for starting and charging the battery (24) in the torque control step to the drive shaft (28) and synchronise the speed of rotation of the drive shaft (28) and the speed of rotation of the primary transmission shaft (32).

20. Transmission apparatus (4) according to any one of claims 17 to 19, wherein the vehicle comprises a second electric motor (36) operatively connected with said non-manual transmission (16), so as to achieve, together with the endothermic engine (8), a propulsion of the hybrid type, and wherein during the step of disengagement and subsequent engagement of the clutch, the second electric motor (36) exerts torque on said automated manual transmission (16) so as to control the forward speed of the vehicle and fill the torque gaps during the gear change.

21. Transmission apparatus (4) according to claim 20, wherein the second electric motor (36) is operatively connected to a secondary transmission shaft (40), arranged downstream of the engine (8) and of the primary transmission shaft (32) on which the clutch acts.

Fig.1

EP 2 985 494 A2

Fig.2

EP 2 985 494 A2

Fig.3

EP 2 985 494 A2

Fig.4

Fig.5

Fig.6 – Prior art